# EUROPÄISCHE PATENTANMELDUNG

(11) **EP 3 816 008 A1**
(43) Veröffentlichungstag der Anmeldung: **05.05.2021**
(21) Anmeldenummer: 19205995.4
(22) Anmeldetag: 29.10.2019
(51) Int. Cl.: B61D 41/04, G06Q 10/02, B60R 21/015, B60N 2/00

(54) **COMPUTERIMPLEMENTIERTES VERFAHREN ZUR ANZEIGE FREIER SITZPLÄTZE**

(71) Anmelder: Cronenberg, Lorenz, 59757 Arnsberg (DE)
(72) Erfinder: Cronenberg, Lorenz, 59757 Arnsberg (DE)
(74) Vertreter: Schäperklaus, Jochen

(57) **Zusammenfassung**

Die Erfindung betrifft ein computerimplementiertes Verfahren zur Anzeige freier Sitzplätze (104), umfassend die Anzeige mehrerer Sitzplätze (104) in verschiedenen Zuständen, wobei der Zustand jeweils aus den Zuständen frei, besetzt und reserviert ausgewählt ist, wobei die Zustände unterschiedlich angezeigt werden.

## Beschreibung

Die vorliegende Erfindung betrifft ein computerimplementiertes Verfahren zur Anzeige freier Sitzplätze gemäß dem Oberbegriff des Anspruchs 1.

Aus dem Stand der Technik sind Reservierungssysteme für Sitzplätze bekannt, bei denen auch freie Sitzplätze angezeigt werden. Aus WO 2018/073606 A1 ist ein Reservierungssystem für Sitzplätze eines Fahrzeugs bekannt, bei dem freie und belegte Sitze angezeigt werden.

Demgegenüber liegt der vorliegenden Erfindung die Aufgabe zugrunde, ein komfortableres Verfahren zu schaffen. Außerdem soll ein solches System geschaffen werden.

Diese Aufgabe wird durch ein Verfahren gemäß Anspruch 1 und durch ein System gemäß Anspruch 14 gelöst. Ausführungsformen der Erfindung sind in den abhängigen Ansprüchen angegeben.

Das Verfahren umfasst die Anzeige mehrerer Sitzplätze in verschiedenen Zuständen. Der Zustand der Sitzplätze ist dabei jeweils aus den Zuständen frei, besetzt und reserviert ausgewählt. Unter einem besetzten Zustand wird dabei verstanden, dass gerade eine Person auf dem Sitzplatz sitzt. Unter einem reservierten Sitzplatz wird verstanden, dass keine Person auf dem Sitzplatz sitzt. Der reservierte Sitzplatz ist jedoch von einer Person zur Benutzung in naher Zukunft reserviert. Unter einem freien Zustand wird verstanden, dass der Sitzplatz unbesetzt ist. Die Zustände werden unterschiedlich angezeigt. Es ist beispielsweise möglich die unterschiedlichen Zustände mit unterschiedlichen Farben darzustellen. So kann beispielsweise ein freier Sitzplatz grün, ein besetzter Sitzplatz rot und ein reservierter Sitzplatz orange dargestellt werden. Es ist dabei wichtig, dass ein reservierter Sitzplatz anders angezeigt wird als ein besetzter Sitzplatz.

Auf diese Weise wird für einen Benutzer der Komfort erhöht, indem er im Gegensatz zum aus WO 2018/073606 A1 bekannten System auf reservierte unbesetzte Plätze hingewiesen wird. Der Benutzer kann somit beispielsweise gezielt diese Sitzplätze beobachten, ob die Reservierung verfällt und der Sitzplatz frei ist. Es ist auch möglich, dass der Benutzer einen reservierten unbesetzten Sitzplatz benutzt und so von einer nicht wahrgenommenen Reservierung profitiert. So kann die Auslastung der Sitzplätze optimiert werden. Ein weiterer Vorteil ist, dass ein Benutzer einen reservierten Sitzplatz solange benutzt, bis die Person, die den Sitzplatz reserviert hat, die Benutzung des Sitzplatzes für sich einfordert. Der Benutzer ohne Reservierung kann dann anschließend nach einem freien oder einem anderen reservierten Sitzplatz suchen und diesen benutzen. Auch dies optimiert die Auslastung der Sitzplätze. Der Komfort für den Benutzer wird erhöht, da er einen Sitzplatz nutzen kann, obwohl kein Sitzplatz frei ist.

Nach einer Ausführungsform der Erfindung können die Sitzplätze jeweils einen Sensor umfassen, der dazu ausgebildet ist, zu ermitteln, ob der Sitzplatz besetzt ist. Dies kann beispielsweise ein Piezosensor oder ein Vibrationssensor sein. Der Sitzplatz wird als besetzt angezeigt, wenn der jeweilige Sensor ermittelt, dass der Sitzplatz besetzt ist. Die Verwendung anderer Sensoren ist ebenfalls möglich. Nach einer Ausführungsform der Erfindung kann der Sensor den Sitzplatz als besetzt ermitteln, wenn der Sensor Vibrationen detektiert. Dies ist vorteilhaft, um zu unterscheiden, ob der Sitzplatz als Ablagefläche, beispielsweise für Bekleidung, Bücher und/oder Lernmaterialien, oder durch eine Person benutzt wird. Eine sitzende Person verursacht über einen Zeitraum von mehreren Minuten immer Vibrationen, da sie nicht über eine längere Zeit komplett bewegungslos sitzt. Abgelegte Gegenstände hingegen verursachen keine Vibrationen. Oft ist die Nutzung als Ablagefläche unerwünscht, da die Sitzplätze durch Personen genutzt werden sollen. Durch Ablegen von Bekleidung, Büchern oder Lernmaterialien werden außerdem häufig Sitzplätze reserviert. Diese Art der Reservierung soll möglichst vermieden werden, da eine Reservierung über ein Reservierungssystem gerechter und einfacher gestaltet werden kann.

Nach einer Ausführungsform der Erfindung kann der Sensor den Sitzplatz als besetzt ermitteln, wenn der Sensor die Vibrationen über mehrere Minuten detektiert. So kann beispielsweise verhindert werden, dass ein Benutzer nur ein paar Sekunden auf dem Sitzplatz sitzt und anschließend Gegenstände auf dem Sitzplatz platziert, um ihn im besetzten Zustand zu halten.

wenn ein diesem Sitzplatz zugeordnetes graphisches Objekt gescannt wird und er zum Zeitpunkt des Scannens im freien Zustand ist, und wobei der Sitzplatz in den freien Zustand geschaltet wird, wenn das graphische Objekt gescannt wird und er zum Zeitpunkt des Scannens im besetzten Zustand ist

Nach einer Ausführungsform der Erfindung kann einer der Sitzplätze in den besetzten Zustand geschaltet werden, wenn ein diesem Sitzplatz zugeordnetes graphisches Objekt gescannt wird und der Sitzplatz zum Zeitpunkt des Scannens im freien Zustand ist. Der Sitzplatz kann in den freien Zustand geschaltet werden, wenn das graphische Objekt gescannt wird und der Sitzplatz zum Zeitpunkt des Scannens im freien Zustand ist. Bei dem graphischen Objekt kann es sich beispielsweise um einen QR-Code handeln. Das graphische Objekt kann beispielsweise mit einem Smartphone durch einen auf dem Sitzplatz sitzenden Benutzer gescannt werden. Bei einem nochmaligen Scannen des QR-Codes kann der Sitzplatz beispielsweise wieder in den freien Zustand geschaltet werden. Es ist auch möglich, dass der Benutzer beim nochmaligen Scannen des QR-Codes auswählen kann, ob der Sitzplatz in den freien oder in den reservierten Zustand geschaltet werden soll. Es kann für den Benutzer vorteilhaft sein, den Sitzplatz in den reservierten Zustand schalten zu lassen, wenn er plant, nach einiger Zeit, diesen Sitzplatz wieder zu nutzen.

Das Scannen des QR-Codes hat gegenüber einer Ausführungsform mit einem Sensor den Vorteil, dass die Sitzplätze nicht mit dem Sensor versehen werden müssen. Eine mögliche Ausnutzung des Verfahrens, sodass ein Benutzer beispielsweise beim Verlassen des Sitzplatzes den QR-Code nicht scannt und den Sitzplatz so im belegten Zustand lässt, kann beispielsweise unterbunden werden, wenn Kontrollen erfolgen, ob der Benutzer den QR-Code gescannt hat, wenn er aufsteht. Wenn ein Benutzer beispielsweise mehrfach dadurch auffällt, den QR-Code beim Aufstehen nicht zu scannen, kann er beispielsweise vom Verfahren ausgeschlossen werden. Dieser Ausschluss kann auch zeitlich begrenzt auf einige Tage erfolgen.

Eine andere Möglichkeit ist, den Benutzer zu belohnen, wenn er den QR-Code beim Verlassen des Sitzplatzes scannt. Beispielsweise kann der Benutzer auf diese Weise Punkte sammeln, die er beispielsweise für einen Snack oder einen Kaffee einlösen kann.

Eine weitere Möglichkeit ist ein Drehkreuz, das beim Verlassen des Raumes, in dem der Sitzplatz angeordnet ist, durchlaufen werden muss. Das Drehkreuz lässt sich nur durchlaufen, wenn nachgewiesen wird, dass der Benutzer den QR-Code beim Aufstehen gescannt hat.

Andernfalls lässt sich das Drehkreuz nicht bewegen und der Benutzer kommt nicht aus dem Raum heraus.

Nach einer Ausführungsform der Erfindung kann eine Nutzerauswahl empfangen werden, die einen Hinweis darauf umfasst, einen der Sitzplätze in den reservierten Zustand zu setzen. Die Nutzerauswahl kann beispielsweise über ein Endgerät eingegeben werden. Das Endgerät kann beispielsweise ein tragbares elektronisches Gerät, z.B. ein Smartphone, sein. Die Nutzerauswahl kann beispielsweise Informationen zu einem bestimmten Sitzplatz enthalten, der reserviert werden soll. Außerdem kann die Nutzerauswahl ein Zeitfenster umfassen, in dem der Sitzplatz reserviert werden soll. Das Zeitfenster kann beispielsweise auf 4 Stunden oder länger begrenzt werden. Außerdem ist es möglich, dass das Zeitfenster höchstens ein oder zwei Tage in der Zukunft liegen darf, sodass Reservierungen erst relativ kurzfristig vorgenommen werden können.

Es ist auch möglich, dass die Nutzerauswahl dadurch empfangen wird, dass der Benutzer zunächst länger als ein erster Zeitraum auf dem Sitzplatz gesessen hat und dann aufgestanden ist. Der erste Zeitraum kann beispielsweise 15 Minuten betragen. Auf diese Weise wird ein Sitzplatz automatisch in den reservierten Zustand gesetzt, wenn ein Benutzer aufsteht und vorher länger als der erste Zeitraum gesessen hat. So ist es einem Benutzer möglich, kurz aufzustehen, um andere Dinge zu erledigen, z.B. etwas essen oder zur Toilette gehen, ohne dabei seinen Sitzplatz zu verlieren.

Es ist möglich, dass die Nutzerauswahl über einen Touchscreen empfangen wird. Der Touchscreen kann beispielsweise Bestandteil des oben erwähnten Endgeräts sein. Es ist auch möglich, dass der Touchscreen fest in einem Gebäude installiert ist, in dem auch die Sitzplätze angeordnet sind.

Nach einer Ausführungsform der Erfindung können die Sitzplätze gleichzeitig mehrere Zustände aufweisen. Die Sitzplätze werden als besetzt angezeigt, wenn sie besetzt und reserviert sind. Dies kann beispielsweise der Fall sein, wenn eine Person einen Sitzplatz für einen bestimmten Zeitraum reserviert und in diesem Zeitraum auch auf dem Sitzplatz sitzt. Die Sitzplätze werden als reserviert angezeigt, wenn sie frei und reserviert sind. Es ist nicht möglich, dass ein Sitzplatz frei und besetzt ist, wenn dies eindeutig durch den Sensor oder durch Scannen des QR-Codes detektiert wird.

Nach einer Ausführungsform der Erfindung kann ein im reservierten Zustand angezeigter Sitzplatz nach Ablauf einer Zeitspanne den reservierten Zustand verlieren. Der Sitzplatz wird dann frei. Die Zeitspanne kann beispielsweise 60 Minuten betragen. Dies ist für die meisten Personen eine ausreichende Zeit, um beispielsweise etwas essen zu gehen. Es ist insbesondere möglich, dass die Zeitspanne beginnt, sobald detektiert wird, dass der Sitzplatz besetzt war und frei geworden ist. Die noch verbleibende Zeit der Zeitspanne kann insbesondere angezeigt werden. Auf diese Weise können andere Personen sehen, wann der betreffende Sitzplatz frei werden könnte.

Nach einer Ausführungsform der Erfindung kann ein Sitzplatz als besetzt angezeigt werden, solange der Sensor den Sitzplatz als besetzt ermittelt oder bis das graphische Objekt nochmals gescannt wird, um den Sitzplatz in den freien Zustand zu schalten. Der Sitzplatz kann für die Zeitspanne als reserviert angezeigt werden, wenn der Sensor den Sitzplatz anschließend als frei ermittelt oder wenn der QR-Code nochmals gescannt wird. Der Sitzplatz kann als frei angezeigt werden, wenn der Sensor den Sitzplatz nach Ablauf der Zeitspanne als frei ermittelt oder wenn der Sitzplatz nicht wieder mittels Scannen des QR-Codes in den besetzten Zustand geschaltet wird.

Nach einer Ausführungsform der Erfindung können Informationen zu den Sitzplätzen im freien Zustand angezeigt werden. Die Informationen können für einen Benutzer nützlich sein, um einen geeigneten Sitzplatz zu finden. Beispielsweise können die Informationen die Temperatur des Raumes umfassen, in dem der Sitzplatz angeordnet ist.

Nach einer Ausführungsform der Erfindung können die Informationen eine Wegbeschreibung und/oder eine Entfernung umfassen. Die Wegbeschreibung und die Entfernung können beispielsweise den Weg zwischen dem aktuellen Standort des Benutzers und dem Sitzplatz umfassen. So kann ein Benutzer leicht erfassen, welcher Sitzplatz für ihn gut erreichbar ist und wie er zu ihm gelangt.

Nach einer Ausführungsform der Erfindung kann das Verfahren den Empfang von Benutzervorlieben umfassen. Die Benutzervorlieben können beispielsweise eine bevorzugte Temperatur, die Nähe zu einem bestimmten Ort, die Möglichkeit, in der Nähe zu essen, die Qualität des Kaffees in der Nähe, das Vorhandensein eines Raucherbereichs in der Nähe, die Anzahl in der Nähe vorhandener Bücher und/oder ein Auslastungsgrad der Sitzplätze im betreffenden Raum umfassen. Diese Punkte können auch zum Teil oder alle Bestandteil der Informationen zu den Sitzplätzen sein.

Nach einer Ausführungsform der Erfindung können die empfangenen Benutzervorliegen mit den Informationen zu den Sitzplätzen abgeglichen werden. Dann kann zu den Sitzplätzen im freien Zustand angezeigt werden, wie gut die Benutzervorlieben mit den Informationen übereinstimmen. Es ist beispielsweise auch möglich, dass nur die Sitzplätze angezeigt werden, die am besten zu den Benutzervorlieben passen.

Das System gemäß Anspruch 14 umfasst ein Anzeigemittel, ein digitales Speichermedium und ein Verarbeitungsmittel. Das Verarbeitungsmittel kann beispielsweise ein Prozessor sein. Das digitale Speichermedium umfasst Instruktionen. Die Instruktionen können beispielsweise als Programmcode ausgebildet sein. Das Verarbeitungsmittel kann dazu ausgebildet sein, bei Ausführung der Instruktionen, ein Verfahren nach einer Ausführungsform der Erfindung durchzuführen. Das Anzeigemittel ist zur Anzeige der Sitzplätze ausgebildet.

Nach einer Ausführungsform der Erfindung kann das System ein erstes elektronisches Gerät und ein zweites elektronisches Gerät umfassen. Das erste elektronische Gerät kann tragbar sein und das Anzeigemittel umfassen. Beispielsweise kann das erste elektronische Gerät ein Smartphone sein. Das zweite elektronische Gerät kann fest in einem Gebäude installiert sein und das Speichermedium und das Verarbeitungsmittel umfassen.

Falls das erste elektronische Gerät ein Smartphone ist, kann es ein weiteres digitales Speichermedium umfassen, auf dem eine App gespeichert ist, die durch das Smartphone ausführbar ist und zur Kommunikation mit dem Verarbeitungsmittel des zweiten elektronischen Geräts ausgebildet ist. Auf diese Weise kann ein Benutzer das Smartphone benutzen, um Reservierungen vorzunehmen und/oder nach freien Sitzplätzen zu suchen.

Das System kann auch dazu verwendet werden, die Nutzung und/oder den Belegungsgrad der Sitzplätze zu verwalten.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Dabei werden für gleiche oder ähnliche Bauteile und für Bauteile mit gleichen oder ähnlichen Funktionen dieselben Bezugszeichen verwendet. Darin zeigen:
- Fig. 1: eine schematische Darstellung eines Systems nach einer Ausführungsform der Erfindung; und
- Fig. 2: eine schematische Darstellung eines Systems nach einer Ausführungsform der Erfindung.

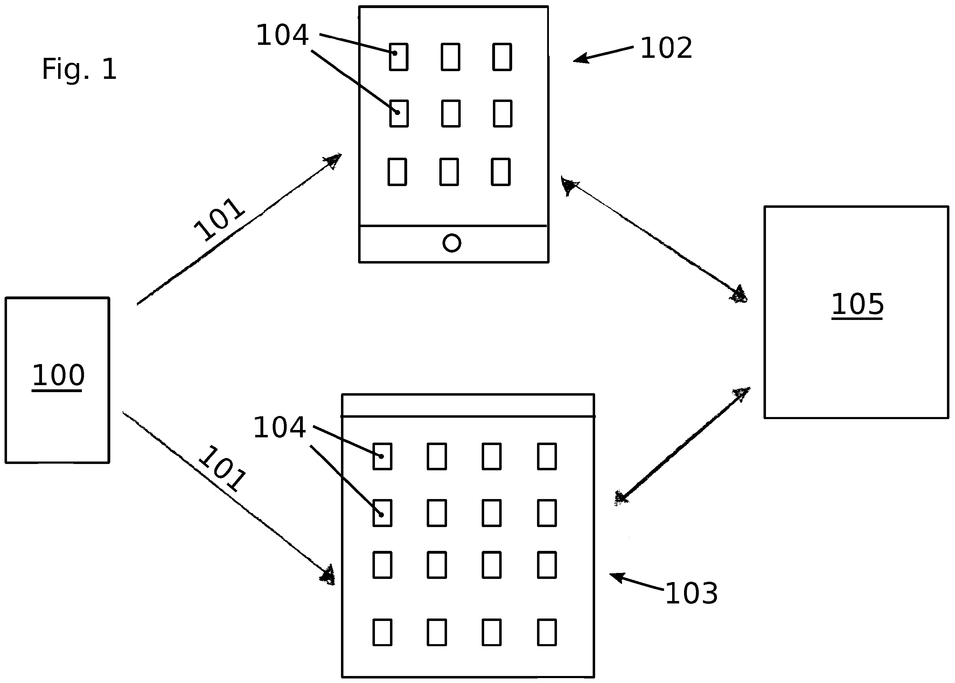

In Figur 1 ist mittels eines Pfeils 101 dargestellt, wie ein Benutzer 100 über eine auf einem Smartphone 102 installierte App auf das System zugreifen kann. Alternativ dazu kann der Benutzer 100 auch über eine Web-Oberfläche 103 auf das System zugreifen. Auch dies ist mittels eines Pfeils 101 dargestellt.

Sowohl auf der Web-Oberfläche 103 als auch auf dem Smartphone 102 sind Sitzplätze 104 dargestellt. Es kann sich dabei beispielsweise um Sitzplätze 104 in einem bestimmten Raum eines bestimmten Stockwerks eines bestimmten Gebäudes handeln. Der Benutzer 100 kann wählen, welchen Raum, welches Stockwerks welchen Gebäudes er sich anzeigen lassen möchte.

Über das Smartphone 102 und die Web-Oberfläche 103 kann der Benutzer 100 Reservierungen der Sitzplätze 104 vornehmen. Außerdem werden die Sitzplätze 104 in verschiedenen Zuständen dargestellt. Die verschiedenen Zustände können beispielsweise farblich unterschieden werden. Jeder der Sitzplätze 104 kann einen Zustand "frei", "besetzt" oder "reserviert" aufweisen. Beispielsweise kann der Zustand "frei" grün, der Zustand "besetzt" rot und der Zustand "reserviert" orange dargestellt werden.

Es ist auch möglich, dass ein Sitzplatz 104 mehrere Zustände gleichzeitig aufweist. In diesem Fall wird jedoch nur einer der Zustände angezeigt. Beispielsweise wird bei einem freien und reservierten Sitz der Zustand "reserviert" angezeigt. Bei einem besetzten und reservierten Sitz wird der Zustand "besetzt" angezeigt.

Der Benutzer 100 kann das Smartphone 102 und die Web-Oberfläche 103 auch zur Reservierung eines Sitzplatzes 104 nutzen. Die Reservierung kann dabei zeitlich begrenzt sein. Beispielsweise können Reservierungen nur für den gleichen und den nächsten Tag möglich sein, um Reservierungen in ferner Zukunft auszuschließen.

Wenn der Benutzer 100 eine Reservierung für einen bestimmten Zeitrahmen durchführt, wird dieser Reservierungswunsch an das Reservierungssystem 105 weitergeleitet, das dann die Reservierung vornimmt und im System speichert. Der nun reservierte Sitzplatz 104 ist nun für den vom Benutzer 100 bestimmten Zeitrahmen reserviert und kann nicht noch von einem anderen Benutzer für den gleichen Zeitrahmen reserviert werden. Er wird während des Zeitrahmens als reserviert dargestellt, wenn keine Person auf ihm sitzt.

Es ist möglich, dass eine Reservierung nach Ablauf einer Zeitspanne verfällt. Wenn beispielsweise der Benutzer 100 den von ihm reservierten Sitzplatz nicht spätestens 15 Minuten nach Beginn des Zeitrahmens besetzt, kann die Reservierung verfallen. Der Sitzplatz 104 wird dann als frei dargestellt.

Wenn der Benutzer 100 keine Reservierung vorgenommen hat und spontan einen Sitzplatz sucht, kann er sich auf der Web-Oberfläche 103 oder auf dem Smartphone 102 anzeigen lassen, wo er einen freien Sitzplatz finden kann oder wo ein reservierter freier Sitzplatz ist, den er für eine kurze Zeit nutzen kann, bis der Inhaber der Reservierung diesen Sitzplatz beansprucht.

Für den Benutzer 100 entfällt somit ein zeitaufwändiges Suchen eines freien Sitzplatzes. Er kann bequem und einfach auf seinem Smartphone 102 den freien Sitzplatz suchen. Optional kann ihm auch die Distanz von seinem derzeitigen Standort zum freien Sitzplatz angezeigt werden. Auch die Anzeige einer Wegbeschreibung ist möglich, damit der Benutzer 100 möglichst einfach den freien Sitzplatz findet.

Wenn der Benutzer 100 auf einem Sitzplatz 104 sitzt und aufsteht, kann dieser Sitzplatz 104 als reserviert angezeigt werden, unabhängig davon, ob der Benutzer 100 eine Reservierung vorgenommen hat. Dies ermöglicht dem Benutzer 100 den Sitzplatz 104 kurz zu verlassen, um beispielsweise etwas zu essen oder zu trinken oder zur Toilette zu gehen. Diese Reservierung kann beispielsweise nach 60 Minuten verfallen, sodass der Sitzplatz 104 dann wieder als frei angezeigt wird.

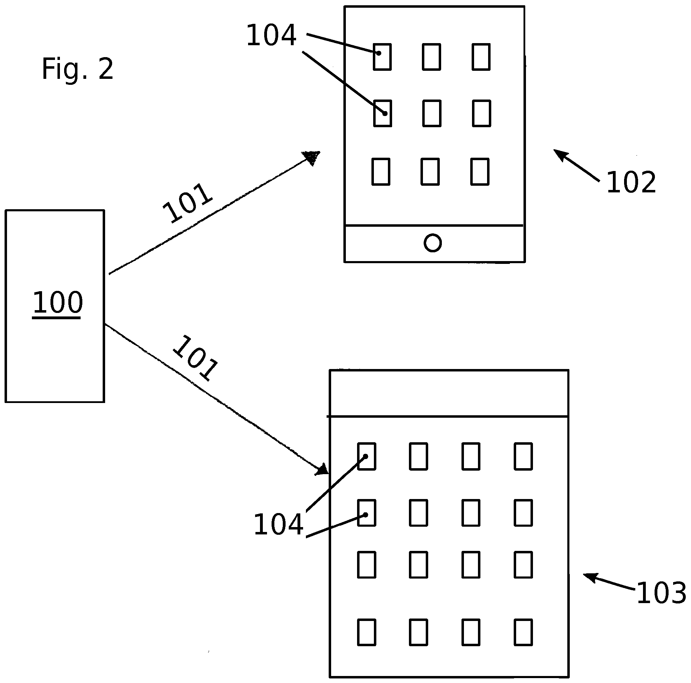

Beim System in Figur 2 können dem Benutzer 100 zusätzlich zum Zustand der Sitzplätze 104 auch Informationen zu den Sitzplätzen 104 dargestellt werden. Die Informationen können dabei einen Bezug zu Benutzervorlieben haben. Beispielsweise kann der Benutzer 100 mit dem Smartphone 102 oder über die Web-Oberfläche 103 seine Benutzervorlieben eingeben. Die Benutzervorlieben können beispielsweise eine bevorzugte Temperatur, die Nähe zu einem bestimmten Ort, die Möglichkeit, in der Nähe zu essen, die Qualität des Kaffees in der Nähe, das Vorhandensein eines Raucherbereichs in der Nähe, die Anzahl in der Nähe vorhandener Bücher, einen Auslastungsgrad der Sitzplätze im betreffenden Raum und/oder andere Vorlieben umfassen. Dementsprechend können die Informationen die Temperatur des jeweiligen Sitzplatzes, die Nähe des jeweiligen Sitzplatzes zu einem bestimmten Ort, die Möglichkeit, in der Nähe des jeweiligen Sitzplatzes zu essen, die Qualität des Kaffees in der Nähe des jeweiligen Sitzplatzes, das Vorhandensein eines Raucherbereichs in der Nähe des jeweiligen Sitzplatzes, die Anzahl in der Nähe des jeweiligen Sitzplatzes vorhandener Bücher, einen Auslastungsgrad der Sitzplätze im gleichen Raum umfassen und/oder andere Informationen.

Es ist möglich, dass dem Benutzer 100 auf dem Smartphone 102 oder der Web-Oberfläche 103 angezeigt wird, wie gut die freien Sitzplätze zu seinen Benutzervorlieben passen. Es ist auch möglich, dass ihm nur die Sitzplätze angezeigt werden, die am besten zu seinen Benutzervorlieben passen. So wird dem Benutzer 100 weiterhin vereinfacht einen am besten zu seinen Benutzervorlieben passenden Sitzplatz 104 zu finden.

## Patentansprüche

1. Computerimplementiertes Verfahren zur Anzeige freier Sitzplätze (104), umfassend die Anzeige mehrerer Sitzplätze (104) in verschiedenen Zuständen, **dadurch gekennzeichnet, dass** der Zustand jeweils aus den Zuständen frei, besetzt und reserviert ausgewählt ist, wobei die Zustände unterschiedlich angezeigt werden.

2. Verfahren nach Anspruch 1, **dadurch gekennzeichnet, dass** die Sitzplätze (104) jeweils einen Sensor umfassen, der dazu ausgebildet ist, zu ermitteln, ob der Sitzplatz (104) besetzt ist, wobei der jeweilige Sitzplatz (104) als besetzt angezeigt wird, wenn der Sensor ermittelt, dass der Sitzplatz (104) besetzt ist.

3. Verfahren nach dem vorherigen Anspruch, **dadurch gekennzeichnet, dass** der Sensor den Sitzplatz (104) als besetzt ermittelt, wenn der Sensor Vibrationen detektiert.

4. Verfahren nach dem vorherigen Anspruch, **dadurch gekennzeichnet, dass** der Sensor den Sitzplatz (104) als besetzt ermittelt, wenn der Sensor die Vibrationen über mehrere Minuten detektiert.

5. Verfahren nach Anspruch 1, **dadurch gekennzeichnet, dass** einer der Sitzplätze in den besetzten Zustand geschaltet wird, wenn ein diesem Sitzplatz zugeordnetes graphisches Objekt gescannt wird und er zum Zeitpunkt des Scannens im freien Zustand ist, und wobei der Sitzplatz in den freien Zustand geschaltet wird, wenn das graphische Objekt gescannt wird und er zum Zeitpunkt des Scannens im besetzten Zustand ist.

6. Verfahren nach einem der vorherigen Ansprüche, **dadurch gekennzeichnet, dass** eine Nutzerauswahl (101) empfangen wird, die einen Hinweis darauf umfasst, einen der Sitzplätze (104) in den reservierten Zustand zu setzen.

7. Verfahren nach einem der vorherigen Ansprüche, **dadurch gekennzeichnet, dass** die Sitzplätze (104) gleichzeitig mehrere Zustände aufweisen können, wobei Sitzplätze (104) als besetzt angezeigt werden, wenn sie besetzt und reserviert sind, und wobei Sitzplätze (1049 als reserviert angezeigt werden, wenn sie frei und reserviert sind.

8. Verfahren nach einem der vorherigen Ansprüche, **dadurch gekennzeichnet, dass** ein im reservierten Zustand angezeigter Sitzplatz (104) nach Ablauf einer Zeitspanne den reservierten Zustand verliert.

9. Verfahren nach dem vorherigen Anspruch, **dadurch gekennzeichnet, dass** ein Sitzplatz (104) als besetzt angezeigt wird, solange der Sensor den Sitzplatz (104) als besetzt ermittelt oder bis das graphische Objekt gescannt wird, um den Sitzplatz in den freien Zustand zu schalten, wobei der Sitzplatz (104) für die Zeitspanne als reserviert angezeigt wird, wenn der Sensor den Sitzplatz (104) als frei ermittelt oder wenn das graphische Objekt gescannt wird, und wobei der Sitzplatz (104) als frei angezeigt wird, wenn der Sensor den Sitzplatz (104) nach Ablauf der Zeitspanne als frei ermittelt oder wenn der Sitzplatz nicht wieder mittels Scannen des graphischen Objekts in den besetzten Zustand geschaltet wird.

10. Verfahren nach einem der vorherigen Ansprüche, **dadurch gekennzeichnet, dass** Informationen zu den Sitzplätzen (104) im freien Zustand angezeigt werden.

11. Verfahren nach dem vorherigen Anspruch, **dadurch gekennzeichnet, dass** die Informationen einen Ort der Sitzplätze (104), eine Wegbeschreibung und/oder eine Entfernung umfassen.

12. Verfahren nach einem der vorherigen Ansprüche, **dadurch gekennzeichnet, dass** das Verfahren den Empfang von Benutzervorlieben umfasst.

13. Verfahren nach dem vorherigen Anspruch, **dadurch gekennzeichnet, dass** die empfangenen Benutzervorlieben mit den Informationen zu den Sitzplätzen (104) abgeglichen werden und dass zu Sitzplätzen (104) im freien Zustand angezeigt werden, wie gut die Benutzervorlieben mit den Informationen übereinstimmen.

14. System zur Anzeige freier Sitzplätze (104), umfassend ein Anzeigemittel, ein digitales Speichermedium und ein Verarbeitungsmittel, wobei das digitale Speichermedium Instruktionen umfasst, wobei das Verarbeitungsmittel dazu ausgebildet ist, bei Ausführung der Instruktionen, ein Verfahren nach einem der vorherigen Ansprüche durchzuführen, und wobei das Anzeigemittel zu Anzeige der Sitzplätze (104) ausgebildet ist.

15. System nach dem vorherigen Anspruch, **dadurch gekennzeichnet, dass** das System ein erstes elektronisches Gerät (102) und ein zweites elektronisches Gerät (105) umfasst, wobei das erste elektronische Gerät (102) tragbar ist und das Anzeigemittel umfasst, und wobei das zweite elektronische Gerät (105) fest in einem Gebäude installiert ist und das Speichermedium und das Verarbeitungsmittel umfasst.
